# EUROPÄISCHE PATENTSCHRIFT

(11) **EP 3 873 641 B1**
(45) Veröffentlichungstag und Bekanntmachung des Hinweises auf die Patenterteilung: **06.12.2023**
(21) Anmeldenummer: 19787182.5
(22) Anmeldetag: 09.10.2019
(51) Int. Cl.: B01D 46/00, B01D 46/02, B01D 46/04

(54) **FILTERANORDNUNG UND VERFAHREN ZUR SCHADENSERMITTLUNG**
FILTER DEVICE AND METHOD OF DETECTING BREAKAGE
AGENCEMENT DE FILTRE ET PROCÉDÉ DE DÉTERMINATION DE DOMMAGES

(30) Priorität: 31.10.2018 DE 102018127303
(43) Veröffentlichungstag der Anmeldung: 08.09.2021
(73) Patentinhaber: Hengst SE, 48147 Münster (DE)
(72) Erfinder: PIETSCHNER, Sieghard, 48268 Greven (DE); EDLERHERR, Roland, 58708 Menden (DE); DORSCHEL, Moritz, 48159 Münster (DE)
(74) Vertreter: Michalski Hüttermann & Partner Patentanwälte mbB
(86) Internationale Anmeldenummer: PCT/EP2019/077323
(87) Internationale Veröffentlichungsnummer: WO 2020/088899

(56) Entgegenhaltungen:
- WO-A1-00/07694
- CA-A- 1 201 788
- CN-A- 108 525 409
- US-A- 5 711 785

## Beschreibung

### Technisches Gebiet

Die Erfindung betrifft eine Filteranordnung mit einer Filterkartusche, die eine Öffnung und eine aus einem Filtermedium gebildete Wandung mit einer eine Filterreinseite begrenzenden Innenseite und einer eine Filterrohseite begrenzenden Außenseite aufweist, einem Gebläse, um zu reinigende Luft zunächst durch die Wandung und in der Folge durch die Öffnung der Filterkartusche zu befördern, und mit einer Reinigungseinrichtung eingerichtet einen Druckluftstoß durch die Öffnung in die Filterkartusche hinein und durch die Wandung aus der Filterkartusche hinaus zu befördern, um Schmutz von einer Außenwand der Wandung weg zu befördern. Die Erfindung betrifft zudem ein Verfahren zum Detektieren einer Leckage einer Filterkartusche, wobei die Filterkartusche eine Öffnung und eine aus einem Filtermedium gebildete Wandung mit einer eine Filterreinseite begrenzenden Innenseite und einer eine Filterrohseite begrenzenden Außenseite aufweist.

### Hintergrund der Erfindung

Filteranordnungen mit einer Mehrzahl Filterkartuschen in Form eines jeweiligen Behälters sind aus dem Stand der Technik bekannt. In sogenannten Filterhäusern werden nicht selten bis zu 1000 Filterkartuschen parallelgeschaltet. Ein Ausfall nur einer der Filterkartuschen beispielsweise aufgrund einer Leckage eines Filtermediums kann aufgrund erhöhter reinseitiger Emissionen zu einem kompletten Produktions- und/oder Anlagenstillstand und entsprechend hohen Ausfallkosten der Produktion führen. Insofern ist man seit Dekaden bemüht, eine schadhafte Filterkartusche möglichst schnell und einfach zu identifizieren.

CN 108525409 A beschreibt ein Bestimmungs- und Schutzverfahren und eine Vorrichtung für ein deaktiviertes Filterrohr eines Filters.

Allerdings kann in Filterhäusern mit vielen parallelgeschalteten Filterkartuschen die Leckage einer einzelnen Filterkartusche nicht zuverlässig mittels des Differenzdrucks detektiert werden, da sich bei annähernd gleichbleibender Druckdifferenz der Volumenstrom durch die einzelne defekte Filterkartusche erhöht. Insofern muss die schadhafte Filterkartusche mit aufwendigen Methoden gesucht werden, beispielsweise mittels lumineszierender Stäube und Spezialkameras zur Detektion der schadhaften Filterkartusche. Die Verwendung kostenintensiver Staub- oder Emissionspartikelmessgeräte können zwar Schadquellen räumlich eingrenzen, jedoch lassen sich schadhafte Filterkartuschen nicht identifizieren. Ein bekanntes Verfahren zur Volumenstrommessung durch einzelne Filterkartuschen verwendet Flügelräder, welche aufgrund beweglicher Teile jedoch Verschmutzungs- und Verschleißanfällig sind. Ein weiteres Verfahren zur Volumenstrommessung nutzt Hitzdrahtanemometer, was sehr energieaufwändig und insofern kostenintensiv ist.

### Beschreibung der Erfindung

Ausgehend von dieser Situation ist es eine Aufgabe der vorliegenden Erfindung, eine Filteranordnung und ein entsprechendes Verfahren anzugeben, um in wesentlich einfacherer und kostengünstigerer Weise eine schadhafte Filterkartusche insbesondere in einem Filterhaus mit Hunderten parallel geschalteten Filterkartuschen identifizieren zu können.

Die Aufgabe der Erfindung wird durch die Merkmale der unabhängigen Ansprüche gelöst. Vorteilhafte Ausgestaltungen sind in den Unteransprüchen angegeben.

Demnach wird die Aufgabe gelöst durch eine Filteranordnung mit
einer Filterkartusche, die eine Öffnung und eine aus einem Filtermedium gebildete Wandung mit einer eine Filterreinseite begrenzenden Innenseite und einer eine Filterrohseite begrenzenden Außenseite, aufweist,
einem Gebläse eingerichtet zu reinigende Luft zunächst durch die Wandung und in der Folge durch die Öffnung der Filterkartusche zu befördern,
einer Reinigungseinrichtung eingerichtet einen Druckluftstoß durch die Öffnung in die Filterkartusche hinein und durch die Wandung aus der Filterkartusche hinaus zu befördern, um Schmutz von der Außenseite der Wandung weg zu befördern, und
einem Sensor eingerichtet zum Bestimmen einer aufgrund des Druckluftstoßes auf einen Messbereich wirkenden Kraft.

Ein wesentlicher Punkt der Erfindung liegt darin, dass die Filterkartusche mit einem Sensor ausgestattet ist, mittels dessen eine beispielsweise aufgrund einer Leckage in dem Filtermedium nicht mehr ordnungsgemäß funktionierende Filterkartusche in einfacher und kostengünstiger Weise lokalisiert werden kann. Die vorgeschlagene Lösung ist insbesondere bei Filterhäusern mit hunderten Filterkartuschen vorteilig, da es möglich wird, eine schadhafte Filterkartusche insbesondere aufgrund einer Änderung der auf den Messbereich wirkenden Kraft zu bestimmen. Der Sensor kann als Differenzdrucksensor ausgeführt sein, um neben einem Differenzdruck der Filterkartusche ebenso eine Intensität des insbesondere regelmäßigen, reinseitigen Druckluftstoß zu erfassen. Die Lösung geht von der Erkenntnis aus, dass im Falle einer Leckage die auf den Messbereich wirkende Kraft bzw. die Intensität des Druckluftstoßes gegenüber einer unversehrten Filterkartusche geringer ist. Dazu ist der Sensor in vorteilhafter Weise eingerichtet, eine Änderung der aufgrund des Druckluftstoßes auf den Messbereich wirkenden Kraft zu bestimmen. In besonders bevorzugter Weise ist mittels des Sensors alternativ oder zusätzlich ein Differenzdruck über das Filtermedium erfassbar, wie nachfolgend noch näher erläutert ist. Insbesondere durch Bestimmen einer Änderung einer negativen Amplitude des Differenzdrucks während des Druckstoßes lässt sich eine Leckage der Filterkartusche detektieren.

Die Filterkartusche kann in beliebiger Weise ausgeführt sein. In bevorzugter Ausgestaltung weist die Filterkartusche einen zylinderförmigen Behälter auf, in dessen Oberseite eine Öffnung ausgebildet ist. Die Öffnung ist bevorzugt kreisrund ausgebildet und kann einen Teil oder die vollständige Oberseite des Behälters ausbilden. Die Reinigungseinrichtung ist bevorzugt ausgebildet, in regelmäßigen Abständen, beispielsweise alle 1, 2, 3, 4, 5 oder 10 Sekunden, den Druckluftstoß beispielsweise mit einem Leitungsdruck von 4, 5, 6, 8 oder 10 Bar durch die Öffnung hindurch in die Filterkartusche einzuleiten. Dazu kann die Reinigungseinrichtung mit einer Düse ausgestaltet sein, die bzw. wobei die Reinigungseinrichtung oberhalb des Behälters angeordnet ist.

Die Filterkartusche kann als ein Behälter mit einer Wandung aus einem gewebten Filtermedium, als sogenannter Filterschlauch, ausgeführt sein, in dessen Innerem ein Stützgerüst wie beispielsweise ein Stützkorb vorgesehen ist. Ebenso ist möglich, dass die Filterkartusche aus einem oder mehreren zylinderförmigen Filterelementen mit einer festen Grundstruktur, beispielsweise mit einer oberen und einer unteren Endscheibe, einem dazwischen angeordneten Filtermedium und eventuell auch einer am Filtermedium angeordneten Stützstruktur gebildet ist. Bei einer aus mehreren Filterelementen gebildeten Filterkartusche sind diese typischerweise übereinander so angeordnet, dass sich die untere Endscheibe eines oberen Filterelements auf der oberen Endscheibe eines unteren Filterelements befindet. Dazu können beide Endscheiben mit einer Öffnung und eine oder beide Endscheiben mit einer dem anderen Filterelement zugewandten Dichtung versehen sein. Derart können zur Bildung einer Filterkartusche bis zu oder mehr als 10 Filterelemente übereinander angeordnet sein.

Im Normalbetrieb der Filterkartusche kann zu reinigende Luft durch ein Gebläse durch das Filtermedium hindurch in einen Innenraum der Filterkartusche und durch die Öffnung hinaus gesaugt werden. Aus der Luft abgereinigte Partikel lagern sich an der Außenwand des Filtermediums bzw. des Seitenabschnitts als Schmutzpartikel ab. Durch den Druckluftstoß werden die abgereinigten Partikel von dem Seitenabschnitt radial "abgesprengt" und können in einem unterhalb der Filterkartusche vorgesehenen Sammelbehälter zur weiteren Entsorgung oder Verarbeitung aufgefangen werden. Typischerweise umfasst eine Filteranordnung mehrere Filterkartuschen. Bevorzugt weist die Filteranordnung ein zentrales Gebläse auf, welches an einem Einlass und/oder Auslass der Filteranordnung vorgesehen ist und entsprechend zu reinigende Luft durch alle Filterkartuschen der Filteranordnung bläst und/oder zieht. Ebenso können mehrere dezentrale Gebläse vorgesehen sein, um einen homogeneren Volumenstrom durch die Filterkartuschen zu erreichen. Ferner kann eine zentrale Reinigungseinrichtung vorgesehen sein, mit der selektiv, parallel oder sequenziell nacheinander die einzelnen Filterkartuschen einer Filteranordnung mittels eines jeweiligen Druckluftstoßes reinigbar sind. Dabei kann insbesondere eine Reinigungseinrichtung mit einem oder mehreren verfahrbaren Leitungsarmen mit jeweils einer Mehrzahl Düsen vorgesehen sein, welche sich über die Öffnungen der Filterkartuschen hinwegbewegen. Während der Überfahrt können Druckluftpulse abgegeben oder ein stetiger Druckluftstrom ausgestoßen werden, welcher durch die Überfahrt der Öffnung der jeweiligen Filterkartusche in diese dann als Druckluftstoß eintritt.

Im Ergebnis lässt sich durch Bestimmen der aufgrund des Druckluftstoßes auf den Messbereich wirkenden Kraft bzw. einer Änderung dieser eine mögliche Leckage der Filterkartusche detektieren. Gerade bei Filterhäusern mit hunderten Filterkartuschen, bei denen bei einer einzelnen schadhaften Filterkartusche der Volumenstrom durch die übrigen Filterkartuschen nur minimal geringer ausfallen und bei denen sich der Differenzdruck zwischen der Filterreinseite und der Filterrohseite nicht wesentlich ändern würde, und insofern eine einzelne schadhafte Filterkartusche nicht detektierbar ist, erlaubt die vorgeschlagene Filteranordnung eine eindeutige Bestimmung der schadhaften Filterkartusche in besonders einfacher und zuverlässiger Weise. Insofern minimiert die vorgeschlagene Lösung Produktions- und/oder Anlagenstillstände von Filterhäusern und reduziert entsprechende Ausfallkosten. Bei der Ausbreitung des Druckluftstoßes durch die Filterkartusche wird über die Wandung der Filterkartusche ein bestimmbarer Volumenstrom nach außen geleitet und ein Überdruck in der Filterkartusche erzeugt. Da der Druckluftstoß in der Regel nur von sehr kurzer Dauer ist, schwenkt der Druckluftstoß rapide in einen Unterdruck um, ohne dass das gesamte in die Filterkartusche geblasene Druckluftvolumen durch die Filterwandung nach außen getreten ist. Bei Auftreten einer Leckage in der Filterwandung erhöht sich der während des Druckluftstoßes nach außen tretende Volumenstrom, so dass die im Messbereich durch den Druckluftstoß detektierbare Kraft sinkt, da weniger Luftmasse auf den Messbereich auftrifft. Der in der einzelnen Filterkartusche durch den Druckluftstoß erzeugte Überdruck ist durch den erhöhten Volumenstrom bei einer Leckage ebenfalls niedriger.

Neben der Detektion einer Leckage sind aus der Bestimmung der auf den Messbereich wirkenden Kraft auch andere Rückschlüsse möglich. Beispielsweise kann ein zu einer Undichtigkeit führender falscher Einbau der Filterkartusche detektiert werden, wenn die Kraft bereits bei Inbetriebnahme der Filterkartusche unter einem zu erwartenden Wert bleibt. Weiter kann eine langsame Abnahme der gemessenen Kraft einzelner Druckluftstöße über einen gewissen Zeitraum darauf hinweisen, dass der Messbereich langsam mit Partikeln beladen wird, was einerseits durch eine sehr kleine Leckage hervorgerufen werden kann, andererseits aber auch im Normalbetrieb vorkommt, wenn in der zu reinigenden Luft auch Partikel vorkommen, die durch die Feinheit des Filtermediums nicht gefiltert werden können. Ferner kann durch einen gleichzeitigen Kraftrückgang in mehreren Filterkartuschen auf eine Leckage oder Verstopfung der Reinigungseinrichtung bzw. dessen Leitungen und/oder Düsen geschlossen werden. Weiter kann durch Analyse der Messsignale, also der bestimmten Kräfte, aller Filterkartuschen auf eine Homogenität eines Abreinigungsprozesses im Filterhaus geschlossen werden. Grundsätzlich ist es wünschenswert, wenn alle Filterkartuschen gleichermaßen durchströmt werden d.h. in allen Filterkartuschen dieselbe Kraft gemessen wird. Sollte die Analyse einen Bereich zeigen, die schlechter oder besser durchströmt werden, könnte in diesen Bereich bei entsprechender Ausgestaltung der Anlage eine Leistung des Gebläses und/oder eine Leistung der Reinigungseinrichtung entsprechend geändert werden. Weiter ist durch eine Zunahme der Kraft auf eine zunehmende Verstopfung der Filterkartusche zu schließen, da bei zunehmender Verstopfung des Filtermediums ein geringerer Volumenstrom durch das Filtermedium treten kann. Sollte dies festgestellt werden, könnte bei entsprechender Gestaltung der Anlage die Reinigungsleistung erhöht werden oder ein Signal zum Filterwechsel ausgegeben werden.

Für die oben genannten Analysen können alle Filterkartuschen in einem Filterhaus mit einem Messbereich bzw. einem Sensor ausgestattet sein. Es ist ebenso möglich, lediglich einen Teil der Filterkartuschen mit dem Sensor auszurüsten. Dies kann insbesondere vorteilhaft sein, wenn gewisse Verschmutzungsgrenzwerte erst nach einem Auftreten zahlreicher Leckagen erreicht werden. Die mit einem Messbereich versehenen Filterkartuschen können eine repräsentativen Leckagewert angeben, welcher auf die Gesamtzahl der Filterkartuschen hochgerechnet werden kann. Die ausgerüsteten Filterkartuschen können in direkter Nachbarschaft zueinander in einem Bereich des Filterhauses, insbesondere auch einem Bereich mit besonders erhöhtem Verschleißaufkommen wie beispielsweise in der direkten Nähe zu einem Lufteinlass zum Filterhaus, und/oder über das Filterhaus verteilt vorgesehen sein. Für die oben genannten Analysen zur Homogenität des Abreinigungsprozesses oder die Feststellung von Leckagen in der Reinigungseinrichtung ist sinnvollerweise eine gleichmäßige Verteilung über das Filterhaus vorzusehen.

Der Messbereich ist bevorzugt innerhalb der Filterkartusche, an der Wandung oder innerhalb der Wandung ausgebildet. Der Messbereich kann ferner auf einer Oberfläche des Filtermediums, einer Filterendscheibe, eines Stützkorbes oder des Sensors selbst vorgesehen sein. Letzteres ist insbesondere dann der Fall, wenn der Sensor selbst im Inneren der Filterkartusche angeordnet ist. Der Sensor kann ebenso innerhalb des Filtermediums, zum Beispiel eingenäht in einen Filterschlauch, innerhalb einer Filterendscheibe, zum Beispiel eingegossen, oder in einer Struktur eines Stützkorbes angeordnet sein, um so den Messbereich zu überwachen. Zudem kann der Sensor außerhalb der Filterkartusche angeordnet sein, wenn der Messbereich auf der Außenseite der Filterkartusche liegt. Durch einen Kraftstoß auf beispielsweise eine untere Endscheibe der Filterkartusche kann sich deren Außenseite nach außen wölben.

Nach einer bevorzugten Weiterbildung ist der Messbereich der Öffnung der Filterkartusche gegenüberliegend angeordnet. Derart kann eine direkte Erfassung des Druckluftstoßes sichergestellt werden, da dieser so direkt auf den Messbereich gerichtet ist. Besonders bevorzugt wird der Messbereich an dem der Öffnung der Filterkartusche gegenüberliegenden Ende der Filterkartusche vorgesehen. Auf diese Weise wird das sicherste Messresultat erzielt, da eine Abschwächung des Druckluftstoßes zwingend vor einem Auftreffen auf den Messbereich geschieht.

Zur Ausgestaltung des Sensors existieren ebenso verschiedene Möglichkeiten. Nach einer bevorzugten Weiterbildung ist der Sensor als Piezo-Element, als Membran, als insbesondere dehnbare Elastomerfolie mit insbesondere flexiblen Elektroden, als Dehnungsmessstreifen, zur an- und abströmseitigen Differenzdruckmessung und/oder als Differenzdrucksensor zum Bestimmen des Differenzdrucks zwischen einem Innenraum der Filterkartusche und der Umgebung der Filterkartusche, als Mikrofon und/oder als optischer Sensor, wie beispielsweise einem Laserdistanzmesser oder einer Kamera, ausgeführt. Der Sensor kann insbesondere innerhalb einer unteren Endscheibe, an einer unteren Endscheibe innenseitig in der Filterkartusche oder innenseitig an einem von der Filterkartusche an der Unterseite abnehmbaren Trägerteil angeordnet sein. Durch die innenseitige das heißt reinseitige Anbringung ist der Sensor nicht den möglicherweise schädlichen Verschmutzungen der Rohseite ausgesetzt. Im Falle einer Elastomerfolie ändert sich durch Verformung der Folie die elektrische Kapazität, wodurch eine Änderung der Kraft feststellbar ist. Im Falle eines Dehnungsmesstreifen ist dieser bevorzugt integriert mit RFID Transponder ausgestaltet. Ebenso ist denkbar, dass der Sensor mehrere Messbereiche mehrerer Kartuschen überwacht. So kann beispielsweise in einer Unterseite einer Kartusche eine flexible Membran vorgesehen sein oder die Unterseite der Kartusche kann aus dem Filtermedium gebildet sein, wie beispielsweise bei einem sogenannten Schlauchfilter, so dass eine unter den Kartuschen angeordnete Kamera eine Dehnung der Membranen oder der Unterseiten bei dem Druckluftstoß detektieren. Die Kamera kann so vorgesehen sein, dass in ihrem Blickfeld mehrere Filterkartuschen angeordnet sind.

Die Filterkartusche kann in unterschiedlicher Bauform ausgeführt sein. Beispielsweise kann die Kartusche als ein sogenannter Schlauchfilter ausgeführt sein, bei welchem das Filtermedium einen langen Schlauch bildet, welcher an seinem einen Ende ebenfalls durch das Filtermedium oder durch eine Endscheibe verschlossen ist und das andere Ende die Öffnung bildet. Die Filterkartusche kann ebenso als ein Filterzylinder ausgebildet sein, bei welchem zwischen zwei Endscheiben ein eigensteifes Filtermedium angebracht ist, welches durch eine Stützkonstruktion abgestützt sein kann. Gemäß einer bevorzugten Weiterbildung wird die Filterkartusche aus wenigstens zwei Filterelementen mit jeweils einer aus dem Filtermedium gebildeten Wandung, mit einer eine Filterreinseite begrenzenden Innenseite und einer eine Filterrohseite begrenzenden Außenseite gebildet, wobei die Außenseite der Filterelemente eine Außenseite der Filterkartusche bilden. Die Filterkartusche kann aus mehr als zehn Filterelementen gebildet werden. Auf diese Weise sind die Filterkartuschen sehr gut auf die Filteranordnung anpassbar. Filteranordnungen können sich je nach Anlage stark in Merkmalen wie verfügbarem Bauraum, Gebläseleistung und Leistung der Reinigungseinrichtung unterscheiden. Werden die Filterkartuschen aus einzelnen Filterelementen aufgebaut, kann auf diese Anforderungen optimal eingegangen werden. Es ist dann bevorzugt möglich, den Messbereich und den zugeordneten Sensor bereits in einem Filterelement zu integrieren. Dieses Filterelement wird bevorzugt am weitesten von der Öffnung entfernt vorgesehen, um die größtmögliche Messsicherheit zu erreichen. Dabei können besonders gut zylindrische Filterelemente der oben genannten Art verwendet werden, bei welchen das Filtermedium um die gesamte Seite der Filterelemente verläuft, so dass das Filtermedium in bevorzugter Weise die gesamte Mantelfläche des zylinderförmigen Filterelements bedeckt. Das Filtermedium kann zudem in einer sogenannten Sternfaltung ausgeführt sein, bei der die Mantelfläche des Zylinders durch ein im Zickzack gefaltetes Medium gebildet wird. Zwischen den Filterfalten können Abstandshalter wie beispielsweise Kleberaupen angeordnet sein. Damit der Luftstrom den Seitenabschnitt durchströmen kann, ist das Filtermedium zweckmäßigerweise luftdurchlässig ausgebildet. Das Filtermedium umfasst in vorteiliger Weise Zellulose, Zellulose mit Synthesefaseranteilen, Synthesefaser- oder Synthesefasermisch-Medien, Nanofasern, Polytetrafluorethylen, Glasfaser, Aktivkohle, Zeolithe, Ionenaustauscher, Silikagel, Siebe, Gitter, Meltblown/Spunbond-Medien, biofunktionale Schichten und/oder Medien mit funktionaler Ausrüstung gegen Bakterien, Viren, Allergenen und/oder Pilzen. Ebenso kann das Filtermedium eine Kombination der vorgenannten Materialien umfassen.

Die Nanofasern weisen bevorzugt einen Faserdurchmesser von kleiner als 500 nm, vorzugsweise 200 nm auf. Ebenso kann der Faserdurchmesser zwischen 50 und 300 nm betragen. Unter dem Begriff Meltblown werden insbesondere Vliese aus Fasern verstanden, welche aus durch Düsen hindurchtretenden Polymerschmelzen ersponnen, mittels heißer Luftströme bis zum Zerreißen verstreckt und durch unmittelbares Ablegen gebildet werden. Derartige auch als Schmelz-Blas-Medien bezeichnete Vliese weisen meist längere Spinnfaser-ähnlichen Endlosfasern auf oder bestehen aus einer Mischung mit Endlosfasern oder vollständig aus Endlosfasern. Werden Vliese aus Fasern, die aus durch Düsen hindurchtretenden Polymerschmelzen gesponnen, mittels kalter Luft und/oder mechanisch verstrickt und durch unmittelbares Ablegen gebildet, werden diese auch als Spinnvliese oder allgemein als Spundbond-Medien bezeichnet. Die aus Vliese gestalteten Filtermedien bauen sich in der Regel aus Filamenten bzw. Endlosfasern auf. Die Synthesefasern können PES, PET, PP, PA, PBT, PTFE etc. umfassen. Zudem können die Filtermedien PTFE Membranmedien umfassen.

In einer alternativen Weiterbildung ist der Messbereich auf einer von der Filterkartusche entfernbaren, den Sensor aufweisenden Trägerplatte ausgestaltet. Die Trägerplatte ist bevorzugt kreisrund gestaltet und/oder wird in einer an der Filterkartusche leicht befestigbaren Trägereinheit gehalten. Bevorzugt kann die Trägerplatte auf unterschiedliche Filterkartuschen oder dessen Filterelemente aufgesteckt werden, so dass einerseits aus dem Stand der Technik bekannte Filterkartuschen mit einer den in Rede stehenden Sensor aufweisenden Trägerplatte nachgerüstet werden können und andererseits defekte Sensoren in einfacher Weise durch Austausch der Trägerplatte ausgewechselt werden können.

Nach einer weiteren bevorzugten Ausgestaltung weist die Filteranordnung eine computerbasierte Kontrolleinheit auf, zum Beispiel in Form eines Mikrocontrollers, welche eingerichtet ist, eine Änderung der durch den Druckluftstoß auf den jeweiligen Sensor wirkenden Kraft festzustellen, um eine Leckage des jeweiligen Filtermediums zu detektieren, und/oder aus der Änderung der auf den jeweiligen Sensor wirkenden Kraft festzustellen, dass ein Austausch der jeweiligen Filterkartusche zu erfolgen hat. Bevorzugt ist die Kontrolleinheit eingerichtet, eine Änderung der Kraft über die Zeit, also in Bezug auf wenigstens zwei nacheinander erfolgende Druckluftstöße, festzustellen. Im Filterbetrieb misst der Sensor bevorzugt den Differenzdruck über die Filterkartusche. Im Reinigungsbetrieb, also wenn die Reinigungseinrichtung den Druckluftstoß aussendet, kann durch den Sensor eine negative Amplitude des Differenzdrucks der Druckwelle des Druckluftstoßes erfasst werden.

Nach einer weiteren Ausgestaltung ist der Sensor als Teil einer Sensoreinheit ausgestaltet, welche zusätzlich die computerbasierte Kontrolleinheit umfasst. Ist der Sensor auf einem Trägerteil angeordnet, so wird bevorzugt die gesamte Sensoreinheit auf dem Trägerteil angeordnet. Derart kann sichergestellt werden, dass die Kontrolleinheit regelmäßigen Wartungszyklen unterliegt, da in regelmäßigen zeitlichen Abständen die gesamte Sensoreinheit getauscht werden kann. Außerdem ergeben sich einige Vorteile, wenn mehrere Filterkartuschen in einem Filterhaus mit einer eigenen Sensoreinheit ausgestattet werden. So kann beispielsweise die Kontrolleinheit eine insbesondere an einer Sichtseite des Trägerteils angebrachte Signaleinrichtung, wie beispielsweise eine Signalleuchte und/oder einen Lautsprecher betätigen, wenn eine Leckage erkannt wird. Zudem kann die Kontrolleinheit im Falle einer Kommunikationsverbindung, kabelgebunden oder kabellos, die ausgewerteten Daten das heißt eine Information zum Zustand der Filterkartusche sowie Daten zu den oben genannten Analysen an eine zentrale Verarbeitungseinheit senden, welche auch über das Internet verbunden an einem entfernten Ort vorgesehen sein kann. Die zentrale Verarbeitungseinheit oder jede einzelne Kontrolleinheit kann ein Signal an einen Benutzer geben oder auch eine Notabschaltung der Anlage durchführen.

In einer weiteren Ausgestaltung weist die Sensoreinheit wenigstens einen weiteren Sensor zur Erfassung eines Umgebungswertes auf, insbesondere einen Sensor zur Erfassung von Temperatur, Luftfeuchte, Partikeln und/oder von Gefahrstoffen. Die von dem weiteren Sensor erhaltenen zusätzlichen Werte können einer Regelung des Betriebs der Filteranordnung dienen und/oder Kennwerte für die abhängige Bestimmung einer Filterleckage liefern, welche von der Kontrolleinheit berücksichtigt werden können. So kann das Filtermedium und/oder eine Messmembran je nach Luftfeuchte und Temperatur unterschiedlich flexibel und luftdurchlässig sein.

Nach einer weiteren bevorzugten Weiterbildung weist die Filterkartusche eine Kommunikationseinrichtung ausgeführt zum drahtlosen Übertragen eines durch die Kontrolleinheit erzeugten Datensatzes auf. Die Kommunikationseinrichtung ist bevorzugt Teil einer Sensoreinheit. Ebenso kann die Kommunikationseinrichtung an einer vorstehend beschriebenen abnehmbaren Trägereinheit angeordnet sein. Die Sensoreinheit bzw. die Filterkartusche weist bevorzugt eine Batterie, den Sensor, einen Speicher und die Kontrolleinheit, die in Kommunikationsverbindung mit einer Empfangseinrichtung steht, auf. Die durch den Sensor bestimmten Kräfte oder dazu erzeugte Datensätze können in dem Speicher zwischengespeichert und/oder durch die Kontrolleinheit verarbeitet werden, beispielsweise hinsichtlich Detektion einer zeitlichen Änderung der bestimmten Kraft. Die Kontrolleinheit kann auf einfache Weise Datensätze an die Empfangseinrichtung übertragen, über welche dann dem Benutzer die Daten zur Verfügung gestellt werden. Es ist auch möglich, dass ein Benutzer mit einer geeigneten Einrichtung Ausgabeanforderungen an die Kommunikationseinheit senden kann, welche diese dann empfängt und eine festgelegte Handlung veranlasst. Dies kann beispielsweise die Ausgabe eines Datensatzes, die Veranlassung eines Messzyklus oder auch die Ausgabe eines Ton- oder Lichtsignals, insbesondere mit entsprechender Signaleinrichtung an der Filterkartusche, sein.

Grundsätzlich kann die Kommunikationseinrichtung beliebig ausgeführt sein. Gemäß einer besonders bevorzugten Weiterbildung ist die Kommunikationseinrichtung zum drahtlosen Übertragen nach einem WLAN-, RFID-, ZigBee-, Z-Wave- und/oder Bluetooth-Standard ausgeführt. Bevorzugt ist die Kommunikationseinrichtung nach einem IEEE-802.11 WLAN-Standard ausgeführt, weist einen RFID Transponder auf und/oder ist nach einem IEEE 802.15.1 Bluetooth-Standard ausgeführt. Durch Vorsehen einer Kommunikationseinrichtung lässt sich in besonders komfortabler Weise eine Vielzahl Filterkartuschen auf Leckagen und entsprechenden Austausch prüfen, ohne dass an jeder einzelnen Filterkartusche diese manuell auf Mängel geprüft werden muss.

Nach einer bevorzugten Ausführung ist die Kommunikationseinrichtung derart in der jeweiligen Filterkartusche positioniert, dass eine Hauptsendeleistung in Richtung orthogonal zu einer Aufreihungsrichtung der Filterkartuschen ausgestrahlt wird. Effektiv bedeutet dies bei vorwiegend zylindrischen Filterkartuschen, welche typischerweise nebeneinander aufgereiht sind, dass die Hauptsendeleistung in Richtung eines der Enden oder beider Enden abgestrahlt wird. Die Hauptsendeleistung kann durch die Öffnung der Filterkartusche in einen darüber liegenden freien Raum oder durch das untere Ende der Filterkartusche in einen darunterliegenden freien Raum abgestrahlt, sodass wenig Interferenz durch die anderen Filterkartuschen bzw. deren metallische Stützstrukturen zu erwarten ist und vorteilhaft eine einzige Empfangseinrichtung im unteren oder im oberen freien Raum vorgesehen sein kann.

An der Sensoreinheit kann eine Batterie und/oder ein sogenannter Energy Harvester vorgesehen sein, um die Stromversorgung der Sensoreinheit bereitzustellen. Geeignete Systeme können beispielsweise Piezoelemente zur Energiegewinnung aus Druck und/oder Vibration, thermoelektrische Generatoren, wie Peltier-Elemente oder auch passive Systeme zum Empfang elektromagnetischer Strahlung über eine Antenne wie passive RFIDs sein. Besonders bei einem RFID ist eine Integration von Sensor, Kommunikationseinrichtung und Stromversorgung in einem einzigen Element möglich.

Nach einer weiteren bevorzugten Ausführung weist jede Sensoreinheit eine Batterie auf und ist so eingerichtet, dass die jeweilige Kommunikationseinrichtung nur bei Feststellung einer Leckage der jeweiligen Filterkartusche oder bei Feststellung, dass die jeweilige Filterkartusche ausgetauscht werden muss oder nach einem festgelegten Zeitintervall oder nach Erhalt einer Ausgabeanforderung einen Datensatz überträgt. Auf diese Weise wird sichergestellt, dass die Batterie möglichst wenig belastet wird und die Sensoreinrichtung über einen langen Zeitraum wie zum Beispiel fünf Jahre einsatzbereit ist. Es kann weiter vorgesehen sein, dass auch die Abfrage des Sensors nicht dauerhaft erfolgt, sondern nur nach fixen Zeitintervallen, wie beispielsweise einmal pro Stunde, einmal pro Tag oder einmal pro Woche. Die Häufigkeit der Sensorabfrage ist abhängig von örtlich gesetzlichen Regelungen zur geforderten Reinheit. Bevorzugt ist die Batterie so ausgelegt, dass der Sensor dauerhaft abgefragt werden kann. Lediglich die Kommunikationseinrichtung kann nach festen Intervallen oder nur in dem Fall senden, wenn ein Austausch der Filterkartusche erforderlich ist. Zudem kann bevorzugt der Benutzer eine Ausgabeanforderung an die Kommunikationseinrichtung übertragen, um den Zustand der Filterkartuschen sowie der Sensoreinheiten zu überprüfen.

Nach einer weiteren bevorzugten Ausführung ist eine Empfangseinrichtung zum Empfangen von Datensätzen der Kommunikationseinrichtungen vorgesehen, eingerichtet zur Feststellung der jeweiligen Sendeposition der jeweiligen Kommunikationseinrichtungen anhand einer jeweiligen Signalstärke und/oder Signalcodierung. Dies ist beispielsweise mit den Standards ZigBee, Z-Wave, und/oder Bluetooth-Mesh zu realisieren und ermöglicht vorteilhafterweise, dass die einzelnen Sensoreinheiten nicht in einer speziellen Ordnung an die Filterkartuschen angebracht werden müssen, sondern einfach frei ohne besondere Sorgfalt verteilt werden können. Die Zuordnung welche Filterkartusche dann defekt ist kann über die Zuordnung der Sendeposition erfolgen. Wenn die Sendeposition nur grob erfasst wird das heißt nicht eindeutig, kann hilfsweise eine Anforderung an die Sensoreinheit gesendet werden, dass diese eine vorgesehene Signaleinrichtung, insbesondere Licht und/oder Ton, aktiviert.

Nach einer alternativen Ausgestaltung weist die Filteranordnung eine Mehrzahl Filterkartuschen und eine Mehrzahl Sensoren mit jeweils einem zugeordneten Messbereich auf, wobei die computerbasierte Kontrolleinheit eingerichtet ist, alle von der Mehrzahl Sensoren übertragener Signale zu Empfangen und Auszuwerten, und durch eine Änderung des jeweiligen Sensorsignals eine Änderung der durch einen Druckluftstoß auf den jeweiligen Messbereich wirkenden Kraft festzustellen, um eine Leckage der jeweiligen Filterkartusche zu detektieren, und/oder aus der Änderung des jeweiligen Sensorsignals festzustellen, dass ein Austausch der jeweiligen Filterkartusche zu erfolgen hat. Bevorzugt sind > 100, ≥ 200, ≥ 300, ≥ 400, ≥ 600, ≥ 800, ≥ 1000 und/oder ≤ 400, ≤ 600, ≤ 800, ≤ 1000 oder ≤ 1200 Filterkartuschen vorgesehen. Weiter bevorzugt sind die Filterkartuschen in einem gemeinsamen Filtergehäuse angeordnet und/oder parallelgeschaltet. Insbesondere bei einer kabelgebundenen Übermittlung der einzelnen Sensorsignale kann vorteilhaft die Auswertung durch eine einzige Kontrolleinheit erfolgen. Die Verbindung der Sensoren mit der computerbasierten Kontrolleinheit kann über weite Strecken geschehen. Beispielsweise kann die Kontrolleinheit, welche über eine Empfangseinrichtung die von den jeweiligen Kommunikationseinrichtungen gesendeten Sensorsignale empfängt und auswertet, in einer entfernten Leitwarte angeordnet sein. Bei einer Übermittlung von Sensorsignalen oder Datensätzen über das Internet können diese entsprechend verschlüsselt übersendet werden.

Die Aufgabe der Erfindung wird zudem durch ein Verfahren zum Detektieren einer Leckage einer Filterkartusche gelöst, wobei die Filterkartusche
eine Öffnung und eine aus einem Filtermedium gebildete Wandung mit einer eine Filterreinseite begrenzenden Innenseite und einer eine Filterrohseite begrenzenden Außenseite, mit den Schritten:
Zuführen eines Druckluftstoßes durch die Öffnung in die Filterkartusche hinein und
Bestimmen einer durch den Druckluftstoß auf einen Messbereich wirkenden Kraft.

Insbesondere durch Bestimmen einer zeitlichen Änderung der auf den Messbereich wirkenden durch einen jeweiligen Druckluftstoß bewirkten Kraft lässt sich in komfortabler Weise erkennen, ob die Filterkartusche schadhaft ist, beispielsweise ein Leck am Filtermedium aufweist. Denn bei einer ordnungsgemäß funktionierenden Filterkartusche ist die während des Druckluftstoßes auf den Messbereich wirkende Kraft bzw. der Impuls im zeitlichen Verlauf jeweils gleich oder annähernd gleich groß. Sofern das Filtermedium beispielsweise aufgrund einer Leckage fehlerhaft ist, wird die auf den Messbereich während des Druckluftstoßes wirkende Kraft durch die Leckage gedämpft bzw. weist gegenüber einer ordnungsgemäß funktionierenden Filterkartusche eine verringerte negative Amplitude des Differenzdrucks zwischen einer Innen- und Außenseite auf. Entsprechend lässt sich durch das vorgeschlagene Verfahren in verlässlicher Art erkennen, ob die Filterkartusche schadhaft ist.

In einer bevorzugten Weiterbildung weist das Verfahren die Schritte auf:
Übertragen eines durch einen Sensor aufgrund des Druckluftstoßes erzeugten Sensorsignals von der Filterkartusche an eine Kontrolleinheit, und
Bestimmen, durch die Kontrolleinheit, einer Änderung der durch den Druckluftstoß auf die Unterseite wirkenden Kraft, um eine Leckage des jeweiligen Filtermediums zu detektieren, und/oder
Feststellen, durch die Kontrolleinheit, aus der Änderung der auf den Messbereich wirkenden Kraft, dass ein Austausch der Filterkartusche zu erfolgen hat.

Mittels einer solchen Weiterbildung lässt sich in einfacher Weise insbesondere bei einem Filterhaus mit einer Vielzahl Filterkartuschen beispielsweise von einer zentralen die Kontrolleinheit aufweisenden Leitwarte automatisiert eine schadhafte Filterkartusche bestimmen, ohne dass jede einzelne Filterkartusche manuell auf Leckage geprüft werden muss. Die Kontrolleinheit kann entfernt von dem Filterhaus vorgesehen sein, beispielsweise beim Hersteller der Filterkartuschen oder bei einem Dienstleister installiert sein. Alternativ kann jedem Sensor eine eigene Kontrolleinheit zugeordnet sein.

Nach einer bevorzugten Weiterbildung umfasst das Verfahren den Schritt Erzeugen eines Datensatzes mit einer Information über einen Zustand der Filterkartusche durch die Kontrolleinheit und Übertragen des Datensatzes durch eine Kommunikationseinrichtung an eine Empfangseinrichtung wenn vorher von der Kommunikationseinrichtung eine Ausgabeanforderung empfangen wurde, und/oder durch die Kontrolleinheit eine Leckage des jeweiligen Filtermediums detektiert wurde, und/oder durch die Kontrolleinheit festgestellt wurde, dass ein Austausch der Filterkartusche zu erfolgen hat.

Gemäß einer anderen bevorzugten Weiterbildung des Verfahrens sind eine Mehrzahl Filterkartuschen vorgesehen. Weiter bevorzugt sind die Filterkartuschen in einem gemeinsamen Filterhaus angeordnet. In einer weiteren bevorzugten Fortbildung des Verfahrens weist die Filteranordnung eine Mehrzahl Sensoren auf. Insbesondere können alle Filterkartuschen mit einem Messbereich und einem zugeordneten Sensor ausgestattet sein. Der Sensor kann ferner in einer, insbesondere von der Filterkartusche entfernbaren, Sensoreinheit angeordnet sein. Bevorzugt weist jede Filterkartusche bei einer Mehrzahl Filterkartuschen einen wie zuvor beschriebenen Sensor auf.

Nach einer noch weiteren bevorzugten Weiterbildung ist der Sensor als Piezo-Element, als Membran, als insbesondere dehnbare Elastomerfolie mit insbesondere flexiblen Elektroden, als Dehnungsmessstreifen, zur an- und abströmseitigen Differenzdruckmessung, als Differenzdrucksensor zum Bestimmen des Differenzdrucks zwischen einem Innenraum der Filterkartusche und der Umgebung der Filterkartusche, als Mikrofon und/oder als optischer Sensor ausgeführt.

Weitere Ausgestaltungen und Vorteile des Verfahrens ergeben sich für den Fachmann in Analogie zu der zuvor beschriebenen Filteranordnung.

### Kurze Beschreibung der Zeichnungen

Nachfolgend wird die Erfindung unter Bezugnahme auf die anliegenden Zeichnungen anhand bevorzugter Ausführungsbeispiele näher erläutert.

In den Zeichnungen zeigen
- Fig. 1: eine Filteranordnung gemäß einem bevorzugten Ausführungsbeispiel der Erfindung in schematischer Schnittansicht,
- Fig. 2: eine Filteranordnung gemäß einem weiteren bevorzugten Ausführungsbeispiel der Erfindung in schematischer Schnittansicht,
- Fig. 3: eine Filterkartusche der Filteranordnung gemäß Figs. 1 oder 2 gemäß einem bevorzugten Ausführungsbeispiel der Erfindung in schematischer Schnittansicht,
- Fig. 4: die Filterkartusche gemäß Fig. 3 gemäß dem bevorzugten Ausführungsbeispiel der Erfindung in einer weiteren schematischen Schnittansicht,
- Fig. 5: eine Filterkartusche der Filteranordnung gemäß Figs. 1 oder 2 gemäß einem weiteren bevorzugten Ausführungsbeispiel der Erfindung in schematischer Schnittansicht,
- Fig. 6: eine Filterkartusche der Filteranordnung gemäß Figs. 1 oder 2 gemäß einem alternativen Ausführungsbeispiel der Erfindung mit einem Schlauchfilter in schematischer Schnittansicht, und
- Fig. 7: ein Zeitdiagramm, in dem oben der Volumenstrom und unten ein Differenzdruck der Filterkartusche gemäß Fig. 3 gemäß dem bevorzugten Ausführungsbeispiel der Erfindung aufgetragen ist.

### Detaillierte Beschreibung der Ausführungsbespiele

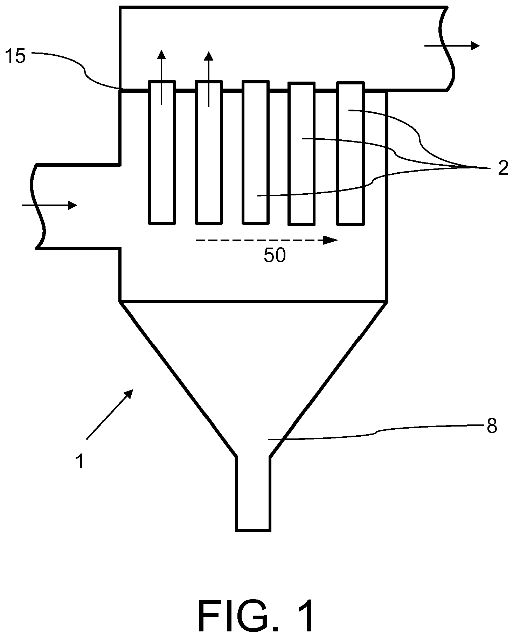

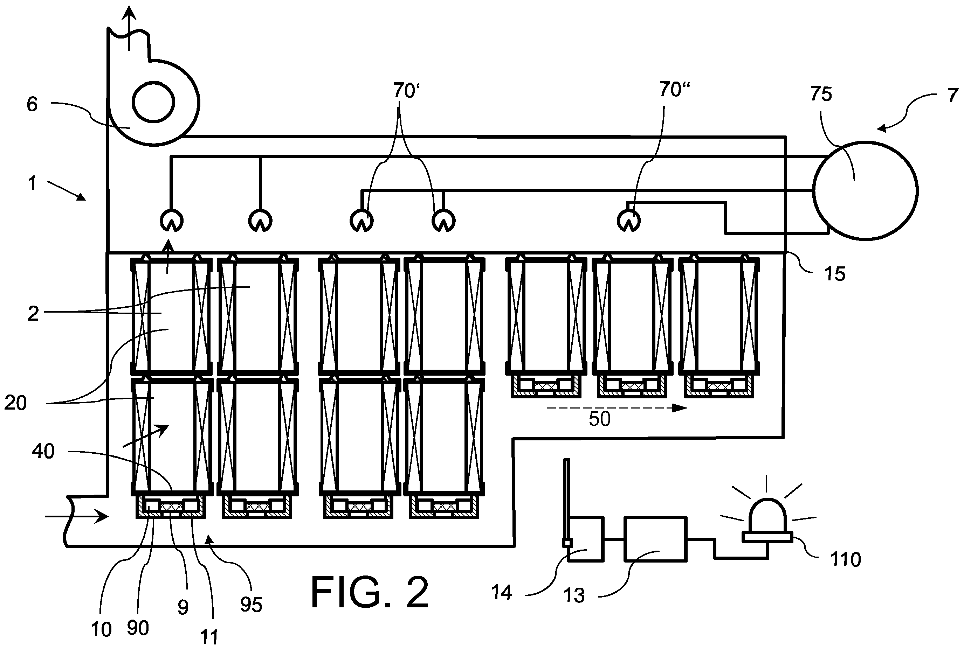

Figs. 1 und 2 zeigen jeweils eine Filteranordnung in einem Filterhaus 1 gemäß einem bevorzugten Ausführungsbeispiel der Erfindung in schematischer Ansicht. Die Filteranordnung weist eine Mehrzahl Filterkartuschen 2 auf, die in dem Filterhaus 1 zum Ausfiltern von Partikeln aus einem Luftstrom - die Strömungsrichtung des Luftstroms ist durch Pfeile symbolisiert - parallelgeschaltet und in einer Aufreihungsrichtung 50 nebeneinander in einer Trennplatte 15 gehalten sind. Fig. 1 zeigt fünf parallel geschaltete Filterkartuschen 2, während in Fig. 2 sieben Filterkartuschen 2 parallelgeschaltet sind. Die in Fig. 2 links gezeigten Filterkartuschen 2 sind aus jeweils zwei Filterelementen 20 gebildet, während die in Fig. 2 rechts gezeigten Filterkartuschen 2 aus nur einem Filterelement 20 gebildet sind.

Die Filterkartuschen 2 sind jeweils, wie Fig. 2 bis 5 in unterschiedlichen exemplarischen Ausgestaltungen in schematischer Schnittansicht gezeigt, in Form eines zylinderförmigen Behälters mit einer Öffnung 30 in dessen durch eine obere Endscheibe 35 gebildeter Oberseite 3, einer geschlossenen Unterseite 4 in Form einer unteren Endscheibe 36 und einer sich zwischen der Oberseite 3 und der Unterseite 4 erstreckenden Wandung 5 aus einem Filtermedium 5a gestaltet. Das Filtermedium 5a verläuft, bis auf einen jeweiligen Rand an der Oberseite 3 und an der Unterseite 4, um die gesamte Seite der Filterkartusche 2 und bildet derart die Mantelfläche des Zylinders aus. Die Wandung 5 weist zur Ausbildung des Filtermediums 5a Falten auf, die sich zwischen einer Innenwand und einer Außenwand der Wandung 5 erstrecken und mittels Raupen voneinander getrennt sind. Ein an dem Filterhaus 1 vorgesehenes Gebläse 6 saugt die zu reinigende Luft durch die jeweiligen Wandung 5 in einen Innenraum der Filterkartusche 2 und in der Folge durch die Öffnung 30 in der Oberseite 3 aus der Filterkartusche 2 hinaus.

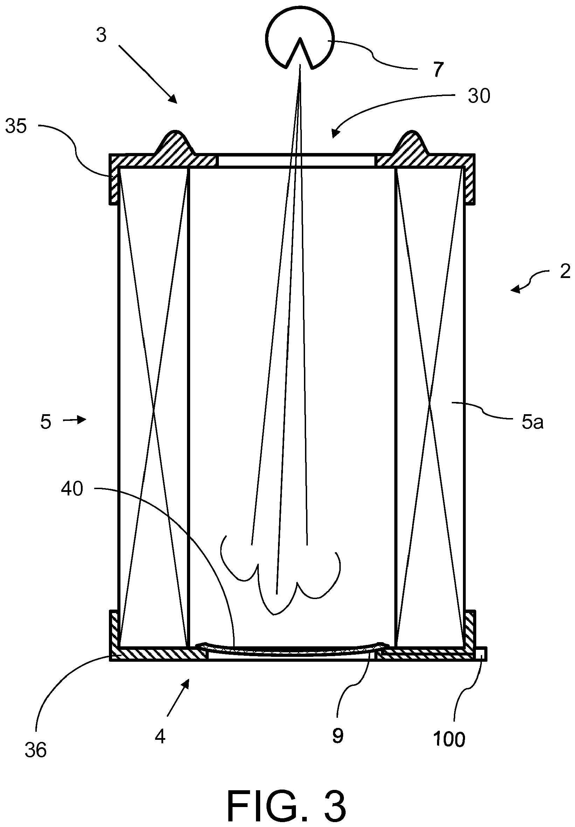

Um an der Außenwand des Filtermediums 5a abgelagerten Schmutz weg zu befördern, weist die Filteranordnung eine Reinigungseinrichtung 7 in Form von einer Mehrzahl Düsen 70 und einer Druckluftquelle 75 auf. Die Reinigungseinrichtung 7 ist oberhalb der Filterkartuschen 2 angeordnet, wobei die Düsen 70 eingerichtet sind, einen Druckluftstoß, angedeutet in Fig. 3, durch die Öffnung 30 in die jeweilige Filterkartusche 2 hinein und durch die Wandung 5 aus der Filterkartusche 2 hinaus zu befördern. An der Außenseite der Wandung 5 abgelagerter Schmutz wird mittels eines solchen von der Reinigungseinrichtung 7 periodisch abgegebenen Druckluftstoßes von der Außenseite radial nach außen "abgesprengt" und fällt zu Boden in einen Sammelbehälter 8 der Filteranordnung. Dabei sind die vier in Fig. 2 dargestellten Düsen 70` statisch über den jeweiligen Filterkartuschen 2 angeordnet und geben in definierten Zeitabständen Druckluftpulse ab, wohingegen die rechte Düse 70" als bewegliche Düse ausgestaltet ist, welche dauerhaft Druckluft ausstößt und zur Bildung der Druckluftpulse über die drei rechten Filterkartuschen 2 kontinuierlich hinwegbewegt wird. Die statischen Düsen 70` geben dabei nicht alle gleichzeitig Ihre Druckluftpulse von sich, sondern zeitlich versetzt.

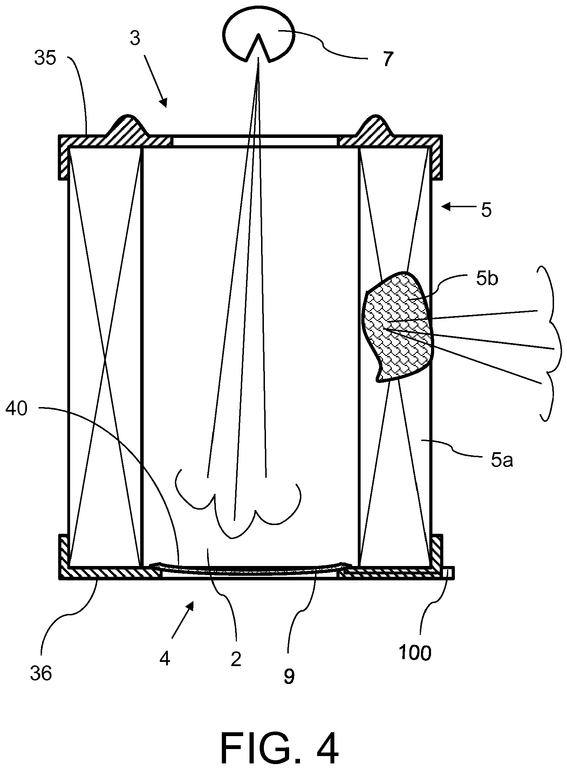

Die Unterseite 4 der Filterkartusche 2 in Fig. 2 ist als eine von der Wandung 5, bzw. dessen Unterseite 4abnehmbare Trägerplatte 90 ausgestaltet. Auf der Trägerplatte 90 ist ein Sensor 9 integriert, um eine aufgrund des Druckluftstoßes auf einen auf der Unterseite 4 gebildeten Messbereich 40 wirkende Kraft zu bestimmen. In der in Fig. 3 und 4 gezeigten Ausgestaltung ist der Sensor 9 als Membran, nämlich als dehnbare Elastomerfolie mit flexiblen Elektroden, ausgestaltet, dessen der Innenseite zugewandte Oberseite den Messbereich 40 bildet. Durch Verformung der Elastomerfolie, angedeutet in Fig. 3 und 4, ändert sich die elektrische Kapazität der Membran, so dass die auf den Messbereich 40 wirkende Kraft und damit die Intensität des Druckluftstoßes bestimmbar ist. Das Sensorsignal kann über eine Kontaktierung 100 an eine nicht dargestellte Kontrolleinheit 13 übergeben werden. Über die Kontaktierung 100 erfolgt auch die Stromversorgung des Sensors 9.

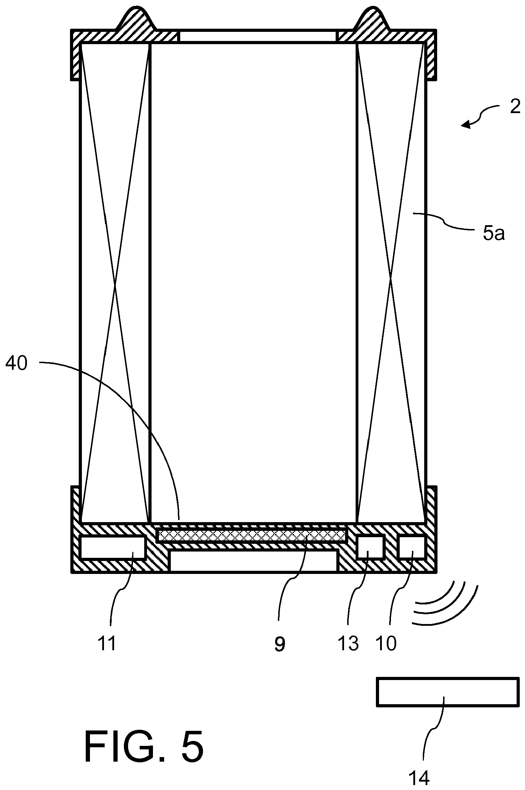

Alternativ kann die Unterseite 4 auch starr mit darauf zum Innenraum der Filterkartusche 2 hin orientierten Piezo-Element als Sensor 9 ausgeführt sein. Zusätzlich können weitere nicht dargestellte Sensoren wie Feuchtigkeitssensoren und/oder Temperatursensoren zum Bestimmen der Feuchtigkeit und/oder der Temperatur vorgesehen sein. Fig. 5 zeigt eine weitere Ausgestaltung des Sensors 9 als Dehnungsmessstreifen zur an- und abströmseitigen Differenzdruckmessung direkt an der Filterkartusche 2. Dazu ist der Dehnungsmessstreifen in einer unteren Endscheibe 36 der Filterkartusche 2 vorgesehen, wo er eingegossen sein kann. Die Dehnung des Sensors 9 ist somit abhängig von der Dehnung der unteren Endscheibe 36 und der Messbereich 40 entspricht der in der Filterkartusche 2 liegenden Oberfläche der unteren Endscheibe 36. Ebenso kann der Sensor 9 als Differenzdrucksensor zum Bestimmen des Differenzdrucks zwischen dem Innenraum des Behälters und der Umgebung des Behälters ausgeführt sein.

Die Filterkartusche 2 weist ferner eine in der unteren Endscheibe 36 integrierte Kommunikationseinrichtung 10 auf, welche zum drahtlosen Übertragen der bestimmten Kraft nach einem WLAN-, RFID- und/oder Bluetooth-Standard ausgeführt ist. In der unteren Endscheibe 36 sind zudem eine Batterie 11 sowie eine Kontrolleinheit 13 mit einem internen Speicher zum Auswerten und Speichern der bestimmten Kraft vorgesehen, die mit der Kommunikationseinrichtung 10 sowie dem Sensor 9 in Verbindung steht. In der Filteranordnung ist zudem eine Empfangseinrichtung 14 vorgesehen, welche die gesendeten Datensätze der Kommunikationseinrichtung 10 empfängt. Die untere Endscheibe 36 mit Batterie 11, Sensor 9, Kontrolleinheit 13 und Kommunikationseinrichtung 10 bildet eine Sensoreinheit 95. Die Sensoreinheit 95 kann auch wie in Fig. 2 gezeigt auf einer abnehmbaren Trägerplatte 90 gebildet sein. Die Sensoreinheit in Fig. 2 umfasst nur den Sensor 9, eine Batterie 11 und eine Kommunikationseinrichtung 10, während die Kontrolleinheit 13 zentral außerhalb gebildet ist. Eine Signaleinrichtung 110 kann einem Benutzer einen Fehlerfall anzeigen. Wenn die Sensoreinheit 95 auf einer von der Wandung 5 abnehmbare Trägerplatte 90 ausgestaltet ist wie in Fig. 2 gezeigt, lässt sich ein Austausch der Batterie 11 in einfacher Weise bewerkstelligen oder lassen sich bereits existierende Filterkartuschen 2 mit einer derartigen Sensoreinheit 95 nachrüsten. Die Mehrzahl Filterkartuschen 2 der Filteranordnung stehen mit einer computerbasierten, in einer entfernten Leitwarte installierten Kontrolleinheit 13 in Kommunikationsverbindung, welche über eine Empfangseinrichtung 14 die von den jeweiligen Kommunikationseinrichtungen 10 gesendeten Sensorsignale empfängt und auswertet.

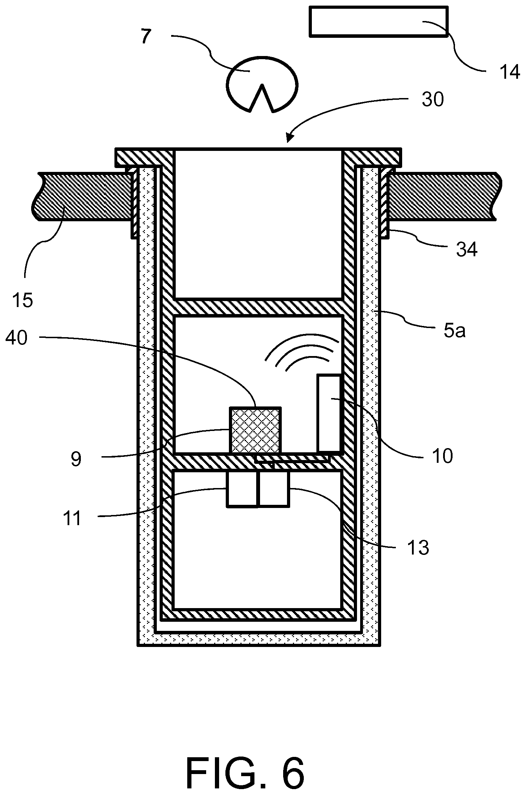

In Figur 6 ist eine alternative Ausführungsform einer Filterkartusche 2 der Filteranordnung gemäß Figs. 1 oder 2 mit einem Schlauchfilter in schematischer Schnittansicht dargestellt. Dabei wird die Wandung 5 von einem die Filterkartusche 2 bis auf der Oberseite 4 umgebenden Filtermedium 5a gebildet. Die Filterkartusche 2 wird mit einem verpressten Dichtbereich 34 in einer Trennplatte 15 gehalten. In die Filterkartusche 2 ist ein Stützkorb 19 eingeführt, auf welchem in einer Position gegenüberliegend der Öffnung 30 der Filterkartusche 2 der Sensor 9 gehalten ist. Der Sensor 9 ist als Mikrofon ausgeführt, dessen Oberseite den Messbereich 40 bildet, und mit einer Kontrolleinrichtung 13 verbunden, welche wiederum mit einer Kommunikationseinrichtung 10 in Verbindung steht. Außerdem ist an dem Stützkorb 19 eine Batterie 11 zur Stromversorgung des Sensors 9, der Kontrolleinheit 13 und der Kommunikationseinrichtung 10 vorgesehen.

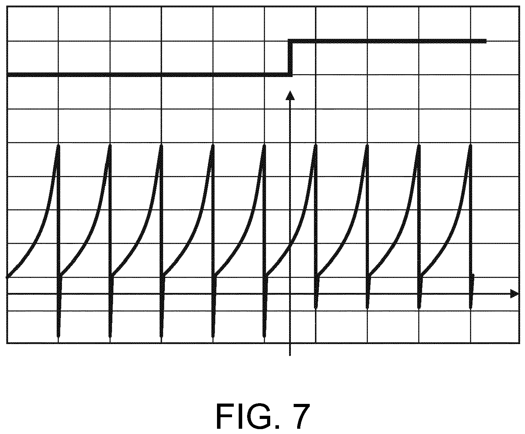

Fig. 7 zeigt ein Zeitdiagramm, in dem oben der Volumenstrom und unten der durch den Sensor 9 gemessene Differenzdruck jeweils über die Zeit dargestellt ist. Entsprechend ist auf der Abszisse die Zeit und auf der Ordinate der Differenzdruck aufgetragen. Der Differenzdruck steigt während des Filterbetriebs periodisch jeweils auf ein Maximum an. Daran anschließend fällt der Differenzdruck im Reinigungsbetrieb bewirkt durch den die Filterkartusche 2 reinigenden Druckluftstoß bis ins Negative ab, was entsprechend als negative Amplitude des Drucks aufgetragen ist.

Bei Auftreten einer Leckage 5b in dem Filtermedium 5a, angedeutet in Fig. 4 in der rechts dargestellten Wandung 5 und zeitlich erfolgend im Achsenkreuz in Fig. 7, steigt einerseits der Volumenstrom durch die Filterkartusche 2 an. Andererseits reduziert sich die negative Amplitude des Drucks. Die Reduzierung der negativen Amplitude entspricht der Änderung der durch den Druckluftstoß auf den Sensor 9 wirkenden Kraft. Die Kontrolleinheit 13 ist ausgestaltet, eine solche Änderung bzw. die reduzierte negative Amplitude zu detektieren, so dass derart eine Leckage 5b des betreffenden Filtermedium 5a feststellbar und ein notwendiger Austausch der Filterkartusche 2 erkennbar hat.

### Bezugszeichenliste

| | |
|---|---|
| Filterhaus | 1 |
| Filterkartusche | 2 |
| Oberseite | 3 |
| Unterseite | 4 |
| Wandung | 5 |
| Filtermedium | 5a |
| Leckage | 5b |
| Gebläse | 6 |
| Reinigungseinrichtung | 7 |
| Sammelbehälter | 8 |
| Sensor | 9 |
| Kommunikationseinrichtung | 10 |
| Batterie | 11 |
| Kontrolleinheit | 13 |
| Empfangseinrichtung | 14 |
| Trennplatte | 15 |
| Stützkorb | 19 |
| Filterelement | 20 |
| Öffnung | 30 |
| Dichtbereich | 34 |
| Obere Endscheibe | 35 |
| Untere Endscheibe | 36 |
| Messbereich | 40 |
| Aufreihungsrichtung | 50 |
| Düse 70 / statische Düse 70` / bewegte Düse 70" | |
| Druckluftquelle | 75 |
| Trägerplatte | 90 |
| Sensoreinheit | 95 |
| Kontaktierung | 100 |
| Signaleinrichtung | 110 |

## Patentansprüche

1. Filteranordnung mit
einer Filterkartusche (2), die eine Öffnung (30) und eine aus einem Filtermedium (5a) gebildete Wandung (5) mit einer eine Filterreinseite begrenzenden Innenseite und einer eine Filterrohseite begrenzenden Außenseite aufweist,
einem Gebläse (6) eingerichtet zu reinigende Luft zunächst durch die Wandung (5) und in der Folge durch die Öffnung (30) der Filterkartusche (2) zu befördern,
einer Reinigungseinrichtung (7) eingerichtet einen Druckluftstoß durch die Öffnung (30) in die Filterkartusche (2) hinein und durch die Wandung (5) aus der Filterkartusche (2) hinaus zu befördern, um Schmutz von der Außenseite der Wandung (5) weg zu befördern, und
einem Sensor (9) eingerichtet zum Bestimmen einer aufgrund des Druckluftstoßes auf einen Messbereich (40) wirkenden Kraft, wobei
der Messbereich (40) an einer der Öffnung (30) gegenüberliegenden Unterseite (4) der Filterkartusche (2) angeordnet ist.

2. Filteranordnung nach dem vorhergehenden Anspruch, wobei der Sensor (9) als Piezo-Element, als Membran, als insbesondere dehnbare Elastomerfolie mit insbesondere flexiblen Elektroden, als Dehnungsmessstreifen, zur an- und abströmseitigen Differenzdruckmessung, als Differenzdrucksensor zum Bestimmen des Differenzdrucks zwischen einem Innenraum der Filterkartusche (2) und der Umgebung der Filterkartusche (2), als Mikrofon und/oder als optischer Sensor (9) ausgeführt ist.

3. Filteranordnung nach einem der vorhergehenden Ansprüche, wobei die Filterkartusche (2) aus mindestens zwei Filterelementen (20) mit jeweils einer aus dem Filtermedium (5a) gebildeten Wandung (5), mit einer die Filterreinseite begrenzenden Innenseite und einer die Filterrohseite begrenzenden Außenseite gebildet ist, wobei die Außenseiten der Filterelemente (20) die Außenseite der Filterkartusche (2) bilden, der Messbereich (40) in einem Filterelement (20) der Filterkartusche (2), insbesondere in dem am Weitesten von der Öffnung (30) der Filterkartusche (2) beabstandeten Filterelement (20), angeordnet ist und das Filterelement (20) den Sensor (9) aufweist.

4. Filteranordnung nach einem der vorhergehenden Ansprüche, wobei der Messbereich (40) auf einer von der Filterkartusche (2) entfernbaren, den Sensor (9) aufweisende Trägerplatte (90) angeordnet ist.

5. Filteranordnung nach einem der vorhergehenden Ansprüche, mit einer computerbasierten Kontrolleinheit (13), welche eingerichtet ist, von dem Sensor (9) übertragene Signale zu Empfangen und Auszuwerten, aus einer Änderung des Sensorsignals eine Änderung der durch einen Druckluftstoß auf den Messbereich (40) wirkenden Kraft festzustellen, um eine Leckage (5b) in der Filterkartusche (2) zu detektieren, und/oder aus der Änderung des Sensorsignals festzustellen, dass ein Austausch der Filterkartusche (2) zu erfolgen hat.

6. Filteranordnung nach dem vorhergehenden Anspruch, wobei der Sensor (9) als Teil einer Sensoreinheit (95) ausgestaltet ist, welche zusätzlich die computerbasierte Kontrolleinheit (13) umfasst, wobei vorzugsweise die Sensoreinheit (95) wenigstens einen weiteren Sensor zur Erfassung eines Umgebungswertes, insbesondere zur Erfassung von Temperatur und/oder Luftfeuchte, umfasst.

7. Filteranordnung nach dem vorhergehenden Anspruch, mit einer Mehrzahl Filterkartuschen (2) und einer Mehrzahl Sensoreinheiten (95), wobei jede Sensoreinheit (95) eine Kommunikationseinrichtung (10) ausgeführt zum drahtlosen Übertragen, insbesondere nach einem WLAN-, RFID-, ZigBee-, Z-Wave- und/oder Bluetooth-Standard, eines durch die Kontrolleinheit (13) erzeugten Datensatzes aufweist.

8. Filteranordnung nach dem vorhergehenden Anspruch, wobei jede Kommunikationseinrichtung (10) derart an der jeweiligen Filterkartusche (2) positioniert ist, dass eine Hauptsendeleistung orthogonal zu einer Aufreihungsrichtung (50) der Filterkartuschen (2) orientiert ist.

9. Filteranordnung nach einem der beiden vorhergehenden Ansprüche, wobei jede Sensoreinheit (95) eine Batterie (11) aufweist und eingerichtet ist, dass die jeweilige Kommunikationseinrichtung (10) nur bei Feststellung einer Leckage (5b) der jeweiligen Filterkartusche (2) und/oder bei Feststellung, dass die jeweilige Filterkartusche (2) ausgetauscht werden muss oder nach einem festgelegten Zeitintervall und/oder nach Erhalt einer Ausgabeanforderung den Datensatz überträgt.

10. Filteranordnung nach einem der drei vorhergehenden Ansprüche, wobei eine Empfangseinrichtung (14) zum Empfangen von Datensätzen der Kommunikationseinrichtungen (10) vorgesehen ist, die zum Feststellen der jeweiligen Sendeposition der jeweiligen Kommunikationseinrichtung (10) anhand einer jeweiligen Signalstärke und/oder Signalcodierung eingerichtet ist.

11. Filteranordnung nach Anspruch 5, mit einer Mehrzahl Filterkartuschen (2) und einer Mehrzahl Sensoren (9) mit jeweils einem zugeordneten Messbereich (40), wobei die computerbasierte Kontrolleinheit (13) eingerichtet ist, alle von der Mehrzahl Sensoren (9) übertragenen Signale zu Empfangen und Auszuwerten, aus einer Änderung des jeweiligen Sensorsignals eine Änderung der durch den Druckluftstoß auf den jeweiligen Messbereich (40) wirkenden Kraft festzustellen, um eine Leckage (5b) der jeweiligen Filterkartusche (2) zu detektieren, und/oder aus der Änderung des jeweiligen Sensorsignals festzustellen, dass ein Austausch der jeweiligen Filterkartusche (2) zu erfolgen hat.

12. Verfahren zum Detektieren einer Leckage (5b) einer Filterkartusche (2) in einer Filteranordnung nach einem der Ansprüche 1-11, wobei die Filterkartusche (2) eine Öffnung (30) und eine aus einem Filtermedium (5a) gebildete Wandung (5) mit einer eine Filterreinseite begrenzenden Innenseite und einer eine Filterrohseite begrenzenden Außenseite aufweist, mit den Schritten:
Zuführen eines Druckluftstoßes durch die Öffnung (30) in die Filterkartusche (2) hinein und
Bestimmen einer durch den Druckluftstoß auf einen an einer der Öffnung (30) gegenüberliegenden Unterseite (4) angeordneten Messbereich (40) wirkenden Kraft.

13. Verfahren nach dem vorhergehenden Verfahrensanspruch, mit den Schritten:
Übertragen eines durch einen Sensor (9) aufgrund des Druckluftstoßes erzeugten Sensorsignals an eine Kontrolleinheit (13), und
Bestimmen, durch die Kontrolleinheit (13), einer Änderung der durch den Druckluftstoß auf den Messbereich (40) wirkenden Kraft, um eine Leckage (5b) des jeweiligen Filtermediums (5a) zu detektieren, und/oder
Feststellen, durch die Kontrolleinheit (13), aus der Änderung der auf den Messbereich (40) wirkenden Kraft, dass ein Austausch der Filterkartusche (2) zu erfolgen hat.

14. Verfahren nach dem vorhergehenden Verfahrensanspruch, mit den Schritten:
Erzeugen eines Datensatzes mit einer Information über einen Zustand der Filterkartusche durch die Kontrolleinheit (13) und Übertragen des Datensatzes durch eine Kommunikationseinrichtung (10) an eine Empfangseinrichtung (14) wenn:
- vorher von der Kommunikationseinrichtung (10) eine Ausgabeanforderung empfangen wurde, und/oder
- durch die Kontrolleinheit (13) eine Leckage (5b) des jeweiligen Filtermediums (5a) detektiert wurde, und/oder
- durch die Kontrolleinheit (13) festgestellt wurde, dass ein Austausch der Filterkartusche (2) zu erfolgen hat.

15. Verfahren nach einem der vorhergehenden Verfahrensansprüche, wobei der Sensor (9) als Piezo-Element, als Membran, als insbesondere dehnbare Elastomerfolie mit insbesondere flexiblen Elektroden, als Dehnungsmessstreifen, zur an- und abströmseitigen Differenzdruckmessung und/oder als Differenzdrucksensor zum Bestimmen des Differenzdrucks zwischen einem Innenraum der Filterkartusche (2) und der Umgebung der Filterkartusche (2), als Mikrofon und/oder als optischer Sensor (9) ausgeführt ist, und/oder mit einer Mehrzahl Filterkartuschen (2) und einer Mehrzahl Sensoren (9).

## Claims

1. A filter arrangement, comprising:
a filter cartridge (2), having an opening (30) and a wall (5), which is formed of a filter medium (5a) and has an inner side delimiting a clean side of the filter and an outer side delimiting a raw side of the filter;
a fan (6) configured to convey air to be purified first through the wall (5), and subsequently through the opening (30) of the filter cartridge (2);
a purification device (7) configured to convey a jet of compressed air through the opening (30) into the filter cartridge (2), and through the wall (5) out of the filter cartridge (2), so as to convey dirt away from the outer side of the wall (5); and
a sensor (9) configured to determine a force acting on a measurement region (40) as a result of the jet of compressed air,
the measurement region (40) being arranged at a lower side (4) of the filter cartridge (2) which is located opposite the opening (30).

2. The filter arrangement according to the preceding claim, wherein the sensor (9) is designed as a piezo element, as a membrane, as an in particular stretchable elastomer film including in particular flexible electrodes, as a strain gauge, for measuring a differential pressure on the inflow and outflow sides, as a differential pressure sensor for determining the differential pressure between an interior of the filter cartridge (2) and the surroundings of the filter cartridge (2), as a microphone and/or as an optical sensor (9).

3. The filter arrangement according to any one of the preceding claims, wherein the filter cartridge (2) is formed of at least two filter elements (20), each having a wall (5), which is formed of the filter medium (5a) and has an inner side delimiting the clean side of the filter and an outer side delimiting the raw side of the filter, the outer sides of the filter elements (20) forming the outer side of the filter cartridge (2), the measurement region (40) being arranged in a filter element (20) of the filter cartridge (2), in particular in the filter element (20) spaced furthest apart from the opening (30) of the filter cartridge (2), and the filter element (20) comprising the sensor (9).

4. The filter arrangement according to any one of the preceding claims, wherein the measurement region (40) is arranged on a carrier plate (90) that is removable from the filter cartridge (2) and comprises the sensor (9).

5. The filter arrangement according to any one of the preceding claims, comprising a computer-based control unit (13), which is configured to receive and to evaluate signals transmitted by the sensor (9), to determine, on the basis of a change of the sensor signal, a change to the force acting on the measurement region (40) by way of a jet of compressed air so as to detect a leak (5b) in the filter cartridge (2), and/or to determine, on the basis of the change of the sensor signal, that the filter cartridge (2) is to be replaced.

6. The filter arrangement according to the preceding claim, wherein the sensor (9) is designed as part of a sensor unit (95), which additionally comprises the computer-based control unit (13), the sensor unit (95) preferably comprising at least one further sensor for detecting an ambient value, in particular for detecting the temperature and/or air humidity.

7. The filter arrangement according to the preceding claim, comprising a plurality of filter cartridges (2) and a plurality of sensor units (95), each sensor unit (95) comprising a communications device (10) designed to wirelessly transmit, in particular in accordance with a WLAN, RFID, ZigBee, Z-wave and/or Bluetooth standard, a dataset generated by the control unit (13).

8. The filter arrangement according to the preceding claim, wherein each communications device (10) can be positioned at the particular filter cartridge (2) in such a way that a main transmission power is oriented orthogonally to a direction of arrangement (50) of the filter cartridges (2).

9. The filter arrangement according to any one of the two preceding claims, wherein each sensor unit (95) comprises a battery (11) and is configured such that the respective communications device (10) only transmits the dataset if a leak (5b) of the respective filter cartridge (2) is determined and/or if it is determined that the respective filter cartridge (2) has to be replaced or following a defined time interval and/or after an output request has been received.

10. The filter arrangement according to any one of the three preceding claims, wherein a receiving device (14) for receiving datasets of the communications devices (10) is provided, which is configured to determine the respective transmission position of the respective communications device (10) on the basis of a respective signal strength and/or signal coding.

11. The filter arrangement according to claim 5, comprising a plurality of filter cartridges (2) and a plurality of sensors (9), each having an associated measurement region (40), the computer-based control unit (13) being configured to receive and to evaluate all signals transmitted by the plurality of sensor (9), to determine, on the basis of a change of the respective sensor signal, a change to the force acting on the respective measurement region (40) by way of a jet of compressed air so as to detect a leak (5b) in the respective filter cartridge (2), and/or to determine, on the basis of the change of the respective sensor signal, that the respective filter cartridge (2) is to be replaced.

12. A method for detecting a leak (5b) of a filter cartridge (2) in a filter arrangement according to any one of claims 1 to 11, the filter cartridge (2) including an opening (30) and a wall (5), which is formed of a filter medium (5a) and has an inner side delimiting the clean side of the filter and an outer side delimiting the raw side of the filter, comprising the following steps:
supplying a jet of compressed air through the opening (30) into the filter cartridge (2); and
determining a force acting on a measurement region (40), which is arranged at a lower side (4) located opposite the opening (30), by way of the jet of compressed air.

13. The method according to the preceding method claim, comprising the following steps:
transmitting a sensor signal, which is generated by a sensor (9) by way of the jet of compressed air, to a control unit (13); and
determining, by the control unit (13), a change to the force acting on the measurement region (40) by way of the jet of compressed air so as to detect a leak (5b) of the respective filter medium (5a); and/or
determining, by the control unit (13), on the basis of the change to the force acting on the measurement region (40), that the filter cartridge (2) is to be replaced.

14. The method according to the preceding method claim, comprising the following steps:
generating a dataset including information regarding a state of the filter cartridge by the control unit (13), and transmitting the dataset by a communications device (10) to a receiving device (14) if:
- an output request was received beforehand by the communications device (10); and/or
- a leak (5b) of the respective filter medium (5a) was detected by the control unit (13); and/or
- it has been determined by the control unit (13) that the filter cartridge (2) is to be replaced.

15. The method according to any one of the preceding method claims, wherein the sensor (9) is designed as a piezo element, as a membrane, as an in particular stretchable elastomer film including in particular flexible electrodes, as a strain gauge, for measuring a differential pressure on the inflow and outflow sides, and/or as a differential pressure sensor for determining the differential pressure between an interior of the filter cartridge (2) and the surroundings of the filter cartridge (2), as a microphone and/or as an optical sensor (9), and/or comprising a plurality of filter cartridges (2) and a plurality of sensors (9).

## Revendications

1. Ensemble filtrant pourvu
d'une cartouche de filtre (2) qui présente un orifice (30) et une paroi (5) formée à partir d'un milieu filtrant (5a) avec une face intérieure délimitant une face intérieure de filtre et une face extérieure délimitant une face brute de filtre,
d'une soufflante (6) conçue pour transporter l'air à purifier d'abord à travers la paroi (5) et par la suite à travers l'orifice (30) de la cartouche de filtre (2),
d'un dispositif de nettoyage (7) conçu pour transporter un courant d'air sous pression à travers l'orifice (30) à l'intérieur de la cartouche de filtre (2) et à travers la paroi (5) vers l'extérieur de la cartouche de filtre (2) afin de transporter des salissures hors de la face extérieure de la paroi (5), et
un capteur (9) conçu pour déterminer une force agissant sur une zone de mesure (40) en raison du courant d'air sous pression, où
la zone de mesure (40) est disposée sur une face inférieure (4) de la cartouche de filtre (2) située en face de l'orifice (30).

2. Ensemble filtrant selon la revendication précédente, dans lequel le capteur (9) est conçu comme un élément piézo, comme une membrane, comme, en particulier, un film élastomère extensible avec en particulier des électrodes souples, comme une jauge de déformation destinée à la mesure d'une pression de différence au niveau de côtés amont et aval, comme un capteur d'une pression de différence pour déterminer la pression de différence entre un espace intérieur de la cartouche de filtre (2) et l'environnement de la cartouche de filtre (2), comme un microphone et/ou comme un capteur optique (9).

3. Ensemble filtrant selon l'une des revendications précédentes, dans lequel la cartouche de filtre (2) est constituée d'au moins deux éléments filtrants (20) avec respectivement une paroi (5) formée à partir du milieu filtrant (5a), avec une face intérieure délimitant la face intérieure de filtre et une face extérieure délimitant la face brute de filtre, où les faces extérieures des éléments filtrants (20) constituent la face extérieure de la cartouche de filtre (2), la zone de mesure (40) est disposée dans un élément filtrant (20) de la cartouche de filtre (2), notamment dans l'élément filtrant (20) le plus éloigné de l'orifice (30) de la cartouche de filtre (2), et l'élément filtrant (20) présente le capteur (9).

4. Ensemble filtrant selon l'une des revendications précédentes, dans lequel la zone de mesure (40) est disposée sur une plaque support (90) pouvant être éloignée de la cartouche de filtre (2) et présentant le capteur (9).

5. Ensemble filtrant selon l'une des revendications précédentes, pourvu d'une unité de commande (13) à base d'un ordinateur, laquelle est conçue pour recevoir et exploiter des signaux transmis par le capteur (9), pour constater une modification de la force agissant sur la zone de mesure (40) par un courant d'air sous pression à partir d'une modification du signal de capteur, pour détecter une fuite (5b) dans la cartouche de filtre (2) et/ou pour constater à partir de la modification du signal de capteur qu'un échange de la cartouche de filtre (2) doit avoir lieu.

6. Ensemble filtrant selon la revendication précédente, dans lequel le capteur (9) est conçu comme faisant partie d'une unité de capteurs (95), laquelle comprend en plus l'unité de commande (13) à base de l'ordinateur, où, de préférence, l'unité de capteur (95) comprend au moins un autre capteur pour la détection d'une valeur environnementale, en particulier, pour la détection de la température et/ou de l'humidité de l'air.

7. Ensemble filtrant selon la revendication précédente, pourvu d'une multiplicité de cartouches de filtre (2) et d'une multiplicité d'unités de capteurs (95), où chaque unité de capteur (95) présente un dispositif de communication (10) conçu pour la transmission sans fil, en particulier selon une norme WLAN, RFIS, ZigBee, Z-Wave et/ou Bluetooth, d'un ensemble de données créé par l'unité de commande (13).

8. Ensemble filtrant selon la revendication précédente, dans lequel chaque dispositif de communication (10) est positionné dans la cartouche de filtre (2) respective de telle manière qu'une puissance d'émission principale est orientée orthogonalement par rapport à une direction d'alignement (50) des cartouches de filtre (2).

9. Ensemble filtrant selon l'une des deux revendications précédentes, dans lequel chaque unité de capteur (95) présente une pile (11) et est conçue de sorte que le dispositif de communication (10) respectif transmette l'ensemble de données uniquement lors du constat d'une fuite (5b) de la cartouche de filtre (2) respective et/ou du constat que la cartouche de filtre (2) respective doit être changée, ou après un intervalle de temps défini et/ou après la réception d'une demande de sortie.

10. Ensemble filtrant selon l'une des trois revendications précédentes, dans lequel un dispositif de réception (14) est prévu pour la réception d'ensembles de données du dispositif de communication (10), qui est conçu pour constater la position d'émission respective du dispositif de communication (10) à l'aide d'une intensité de signal respective et/ou d'un codage de signal.

11. Ensemble filtrant selon la revendication 5, pourvu d'une multiplicité de cartouches de filtre (2) et d'une multiplicité de capteurs (9) avec respectivement une zone de mesure (40) associée, où l'unité de commande (13) à base de l'ordinateur est conçue pour recevoir et exploiter tous les signaux transmis par la multiplicité des capteurs (9), pour constater une modification de la force agissant sur la zone de mesure (40) par le courant d'air sous pression à partir d'une modification du signal de détecteur respectif, afin de détecter une fuite (5b) de la cartouche de filtre (2) respective, et/ou détecter qu'un changement de la cartouche de filtre (2) respective doit avoir lieu à partir de la modification du signal de capteur respectif.

12. Procédé de détection d'une fuite (5b) d'une cartouche de filtre (2) dans un ensemble filtrant selon l'une des revendications 1 à 11, dans lequel la cartouche de filtre (2) présente un orifice (30) et une paroi (5) formée à partir d'un milieu filtrant (5a) avec une face intérieure délimitant une face intérieure de filtre et une face extérieure délimitant une face brute de filtre, avec les étapes :
d'alimentation d'un courant d'air sous pression à travers l'orifice (30) vers l'intérieur dans la cartouche de filtre (2), et
de détermination d'une force agissant sur une zone de mesure (40) par le courant d'air sous pression disposée au niveau d'une face inférieure (4) située à l'opposé de l'orifice (30).

13. Procédé selon la revendication de procédé précédente, avec les étapes :
de transmission d'un signal de capteur créé par un capteur (9) du fait du courant d'air sous pression à une unité de commande (13), et
de détermination, par l'unité de commande (13), d'une modification de la force agissant sur la zone de mesure (40) par le courant d'air sous pression afin de détecter une fuite (5b) du milieu filtrant (5a) respectif, et/ou
de constatation, par l'unité de commande (13), qu'un échange de la cartouche de filtre (2) doit avoir lieu à partir de la modification de la force agissant sur la zone de mesure (40).

14. Procédé selon la revendication de procédé précédente, avec les étapes :
de création d'un ensemble de données avec une information concernant l'état de la cartouche de filtre par l'unité de commande (13) et de transmission de l'ensemble de données par un dispositif de communication (10) à un dispositif de réception (14) :
- lorsqu'une demande de sortie a été reçue auparavant par le dispositif de communication (10), et/ou
- lorsqu'une fuite (5b) du milieu filtrant (5a) respectif a été détectée par l'unité de commande (13), et/ou
- lorsqu'il a été constaté par l'unité de commande (13) qu'un changement de cartouche de filtre (2) doit avoir lieu.

15. Procédé selon l'une des revendications de procédé précédentes, dans lequel le capteur (9) est conçu comme un élément piézo, comme une membrane, comme, en particulier, un film élastomère extensible avec en particulier des électrodes souples, comme une jauge de déformation destinée à la mesure d'une pression de différence aux côtés amont et aval, et/ou comme capteur d'une pression de différence pour déterminer la pression de différence entre un espace intérieur de la cartouche de filtre (2) et l'environnement de la cartouche de filtre (2), comme un microphone et/ou comme un capteur optique (9), et/ou avec une multiplicité de cartouches de filtre (2) et une multiplicité de capteurs (9).
